Europäisches Patentamt

European Patent Office

Office européen des brevets

(19)

(11) Veröffentlichungsnummer : **0 025 849**
**B1**

(12) **EUROPÄISCHE PATENTSCHRIFT**

(45) Veröffentlichungstag der Patentschrift :
01.06.83

(51) Int. Cl.³ : **G 03 B 27/73**

(21) Anmeldenummer : **80104673.1**

(22) Anmeldetag : **08.08.80**

(54) **Filteranordnung für ein fotografisches Farbvergrösserungs- oder -kopiergerät.**

(30) Priorität : **18.09.79 IT 484379**

(43) Veröffentlichungstag der Anmeldung :
**01.04.81 Patentblatt 81/13**

(45) Bekanntmachung des Hinweises auf die Patenterteilung : **01.06.83 Patentblatt 83/22**

(84) Benannte Vertragsstaaten :
**AT CH DE FR GB LI NL**

(56) Entgegenhaltungen :
**DE A 1 932 239**
**DE A 2 258 591**
**DE A 2 358 440**
**DE B 1 230 243**
**US A 4 043 646**

(73) Patentinhaber : **Durst AG Fabrik Fototechnischer Apparate**
**Gerbergasse 58**
**I-39100 Bozen (IT)**

(72) Erfinder : **Obertegger, Franz**
**Sarnserstrasse 1**
**I-39042 Brixen/Milland (IT)**

(74) Vertreter : **Kapfinger, Wolfgang**
**c/o DURST AG Fabrik Fototechnischer Apparate Köstlanstrasse 12**
**I-39042 Brixen (BZ) (IT)**

Filteranordnung für ein fotografisches Farbvergrößerungs- oder -kopiergerät

Die Erfindung betrifft eine Filteranordnung für ein fotografisches Farbvergrößerungs- oder -kopiergerät.

Bei bekannten Geräten dieser Art wird eine farbliche Veränderung des Kopierlichtes durch Einführen entsprechender Farbfilter in dessen Strahlengang erreicht. Bei einer bekannten Geräteart sind derartige Filter auch nur teilweise und kontinuierlich in den Strahlenquerschnitt einführbar, wobei die farbliche Veränderung des Kopierlichtes umso stärker ist je größer der vom Filter erfaßte Anteil des Strahlenquerschnittes ist. Dadurch entsprechende Lichtverteilungseinrichtungen erzielt man eine für die praktischen Bedürfnisse als farblich homogen anzusehende Beleuchtung der zu kopierenden Bildvorlage.

Bei anderen bekannten Geräten erfolgt die Beeinflussung des Kopierlichtes durch in dessen Strahlengang vollkommen einführbare Filter, wobei zumeist drei Filter unterschiedlicher Färbung nacheinander in einer gewissen zeitlichen Folge den gesamten Strahlenquerschnitt beeinflussen. Je nach den verwendeten Filtern unterscheidet man dabei zwischen einer subtraktiven und einer additiven Filterung bzw. Kopiermethode.

In den meisten in Frage kommenden Geräten wird durch Einsatz entsprechender Lichtquellen und Reflektoren — beispielsweise durch Halogenlampen, deren Wendel in einem Brennpunkt eines Ellipsoidreflektors angeordnet ist — ein Strahlenbündel erzeugt, das in einer gewissen Entfernung von der Lichtquelle eine Einschnürung aufweist. Die erwähnten Farbfilter werden vorzugsweise im Bereich des kleinsten Querschnittes des Strahlenbündels eingeführt, obwohl dort die Wärmebelastung pro Flächeneinheit am größten ist. Dies geschieht hauptsächlich, um die zumeist verwendeten, verhältnismäßig teuren dichroitischen Interferenzfilter so klein wie möglich zu halten und auf diese Weise keine unnötigen Kosten entstehen zu lassen. Diese Filter können in der besagten Zone aufgrund ihrer geringen Wärmeaufnahme im Normalfall ohne Probleme eingesetzt werden, da der nicht durchgelassene Strahlungsanteil größtenteils reflektiert wird. In vielen Fällen muß jedoch zwischen der Lichtquelle und diesen Filtern ein Wärmeschutzfilter angeordnet werden, um deren sicheren Einsatz zu gewährleisten. Eine solche Maßnahme ist mit einer Verteuerung der entsprechenden Einrichtung verbunden.

Der Verwendung von Absorptionsfiltern, deren Herstellungskosten um ein Vielfaches unter denen der genannten Interferenzfilter liegen, stand in vielen Fällen deren ungünstiges thermisches Verhalten entgegen. Da in solchen Filtern der größte Teil der nicht durchgelassenen Strahlung, die einen sehr hohen Wärmeanteil enthält, absorbiert wird und das Trägermaterial, zumeist Glas, ein schlechter Wärmeleiter, ist, werden diese Filter sehr stark erhitzt. Dazu kommt noch, dass in der Einführungszone der Filter zumeist eine ungleiche Lichtverteilung besteht, was eine ebenso ungleichmäßige Wärmeverteilung zur Folge hat. Die Wirkungen von hoher Temperatur und von hohen Temperaturgradienten aufgrund der ungleichen Wärmeverteilung überlagern sich und führen zu einem hohen Grad der Zerbrechlichkeit der genannten Absorptionsfilter, da im Filter Temperaturen und durch Temperaturunterschiede bedingte Wärmespannungen entstehen, die die bei den üblichen Filtermaterialien zulässigen Werte übersteigen.

Dieselben Erscheinungen treten bei Interferenzfiltern auf, wenn sie einer starken Wärmebelastung ausgesetzt sind.

Der Erfindung liegt die Aufgabe zugrunde, Filteranordnungen der eingangs genannten Art so zu verbessern, dass sie bei höheren Temperaturen als bisher einsetzbar sind.

Die Aufgabe wird durch die in Anspruch 1 gekennzeichnete Erfindung gelöst.

Das Wärmeleitmittel umfaßt in einer besonderen Ausführungsform ein Gitter aus wärmeleitendem Material, das am Filterhalter befestigt wird, sich über die gesamte aktive Filteroberfläche erstreckt und an dieser anliegt. Durch den sich ergebenden thermischen Kontakt zwischen Filter und Wärmeleitmittel wird eine bessere Wärmeableitung und eine über die gesamte Ausdehnung der Filterscheibe gleichmäßigere Wärmeverteilung gegenüber einem Filter ohne die erfindungsgemäße Maßnahme erzielt, was zu geringerer Erwärmung und kleineren Wärmespannungen im Filter führt. Dieses wird also thermisch wirkungsvoll entlastet, sodass es in einem erheblich weiteren Temperaturbereich einsatzfähig ist.

Das Wärmeleitmittel wird vorteilhaft an der der Lichtquelle zugewandten Lichteinlaßseite des Filters angebracht.

Der durch ein solches Wärmeleitmittel bedingte Verlust an ausnützbarem Lichtquerschnitt fällt in vielen Anwendungsfällen nicht ins Gewicht und ist insbesondere bei den den Grün- und Blaubereich von Kopiermaterial beeinflussenden Filtern von praktisch geringer Bedeutung, da infolge der in diesen Spektralbereichen relativ hohen Empfindlichkeit der zur Anwendung kommenden Kopiermaterialien die benötigte Lichtmenge im Vergleich zu Rot geringer ist und die Gesamtbelichtungszeit in Geräten, in denen die Belichtungen in den drei Grundfarben gleichzeitig erfolgen, im wesentlichen von der Rotbelichtung bestimmt wird.

Dasselbe trifft auch bei Geräten mit sequentieller Farbbelichtung zu, da im Interesse eines möglichst geringen Einstell- und Regelaufwandes zum Ausgleich von belichtungszeitabhängigen Nebeneffekten im allgemeinen mit in allen drei Grundfarben annähernd gleichen Belichtungszeiten gearbeitet wird und ein bestimmter Mindestwert dieser Belichtungszeit ohnehin nicht unterschritten werden darf, wenn in der Mechanik ds Gerätes bedingte Zeitkonstanten nicht störend in die Belichtungszeit eingehen sollen. Durch unterschiedliche Auslegung der Filtergrößen bzw. der Lichtdurchlaßöffnungen im Wärmeleitmittel kann die Lichtstärke in den einzelnen Farbbereichen der Empfindlichkeit des Fotopapieres angepaßt werden.

In einer Ausführungsform der Erfindung kann daher mit Rücksicht auf die erreichbaren Belichtungszeiten die Maßnahme der thermischen Entlastung der Filter durch ein erfindungsgemäßes Wärmeleitmittel auf das Grün- und Blaufilter beschränkt bleiben und für das Rotfilter ein kostenaufwendigeres Filter, das ohne ein solches Wärmeleitmittel einsatzfähig ist und somit nicht die von diesem verursachte Lichtdämpfung erfährt, Verwendung finden.

Weitere Merkmale und Vorteile der Erfindung ergeben sich aus den Unteransprüchen in Verbindung mit der Beschreibung eines Ausführungsbeispieles, das im folgenden anhand von Zeichnungen erläutert wird. Dabei zeigen :

Figur 1 eine stark schematisierte Schnittdarstellung eines Vergrößerungsgerätes ;

Figur 2 eine Filteranordnung mit drei beweglichen, in den Strahlengang einführbaren Farbfiltern und deren Betätigungsvorrichtung ;

Figur 3 ein Detail aus Figur 2 mit einem Filter und einem Wärmeleitmittel ;

Figur 4 das Filter von Figur 3 in einem Schnitt durch die Mittellinie ;

Figur 5 eine weitere Ausführungsform einer Filteranordnung.

Eine Lichtquelle 1 mit angeformtem Reflektor 2 erzeugt ein zuerst konvergierendes und dann divergierendes Lichtbündel 3, das nach Durchgang durch einen Lichtleitschacht 3a eine zu kopierende Bildvorlage 4 durchsetzt, die von einem Objektiv 5 auf die Projektionsebene 6 projiziert wird. An der Stelle, wo das Lichtbündel 3 seine größte Einschnürung erfährt, befindet sich eine beispielsweise drei Farbfilter umfassende Filteranordnung 7, dessen Filter 8, 9, 10 in je einer Grundfarbe durch eine Betätigungsvorrichtung 11 einzeln in den Strahlengang einführbar sind. Beispielsweise ist das Filter 8 ein Blaufilter, das Filter 9 ein Grünfilter und das Filter 10 ein Rotfilter. Die Steuerung des Belichtungsablaufes erfolgt über eine eingebaute farbsensible Fotodiode 12 in Verbindung mit einer beispielsweise elektronischen Steuereinrichtung 12a.

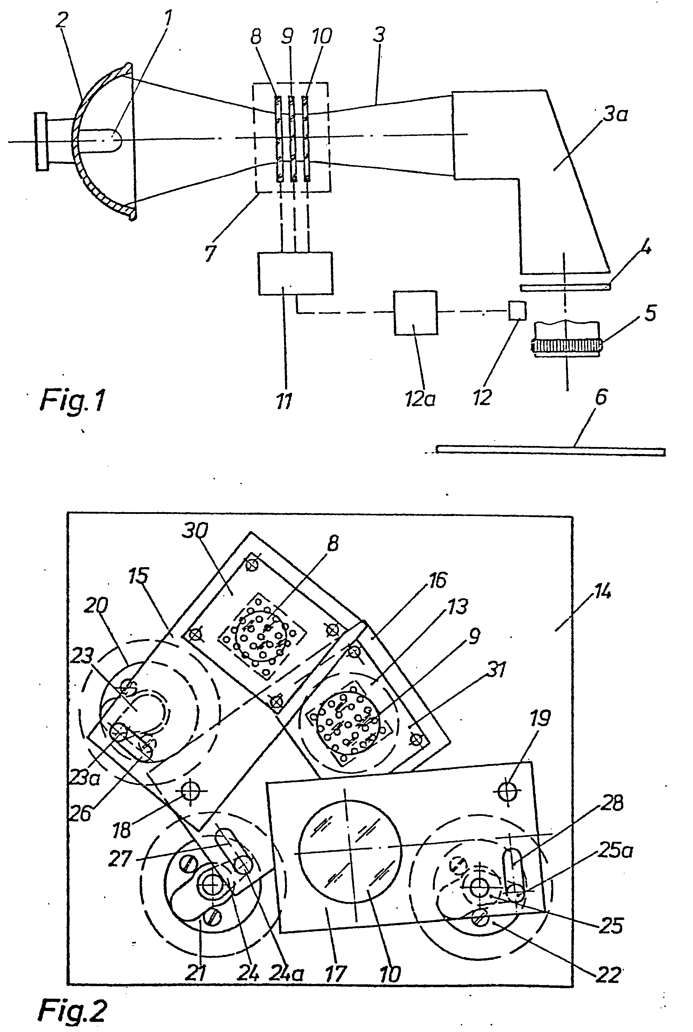

In der in Figur 2 näher dargestellten Ausführung der Filteranordnung 7 und der Betätigungsvorrichtung 11 sind auf einer eine Lichtdurchlaßöffnung 13 aufweisenden Platte 14 zwei Filterhalter 15 und 16 um eine gemeinsame, gerätefeste Drehachse 18 und ein dritter Filterhalter 17 um eine weitere, ebenfalls gerätefeste Drehachse 19 drehbar gelagert.

Den Filterhaltern 15, 16 und 17 sind die an der Platte 14 befestigten, dem erforderlichen Belichtungsablauf entsprechend gesteuerten Elektromotoren 20, 21 und 22 zugeordnet, auf deren Wellen jeweils Kurbeln 23, 24 bzw. 25 festsitzen. Ein Zapfen 23a der Kurbel 23 greift gleitbar in eine Führungsöse 26 des Filterhalters 15 ein und bewegt diesen beim Laufen des Motors mit. Je nach Laufrichtung des Motors 20 erreicht dabei der Filterhalter eine der beiden durch Endanschlag des Kurbelzapfens 23a in der Führungsöse 26 festgelegten Endstellungen. In derselben Weise greift de Zapfen 24a der Kurbel 24 in eine Führungsöse 27 des Filterhalters 16 und der Zapfen 25a der Kurbel 25 in eine Führungsöse 28 des Filterhalters 17 ein, sodass die drei Filterhalter 15, 16, 17 durch die ihnen zugeordneten Motoren 20, 21, 22 einzeln oder gleichzeitig in drei verschiedenen, zur Achse des Lichtbündels normal liegenden Ebenen zwischen zwei durch Endanschlag der Zapfen 23a, 24a, 25a in den Führungsösen 26, 27, 28 festgelegten Endstellungen bewegbar und die auf dem jeweiligen Halter befestigten Filter 8, 9, 10 in den Strahlengang der Lichtöffnung 13 ein- und aus diesem herausführbar sind. In einer der beiden Endstellungen eines jeden Filterhalters liegt das entsprechende Filter vollständig im Strahlengang, während es sich in der anderen außerhalb des Strahlenganges befindet ; welche der beiden Endstellungen erreicht wird, hängt lediglich von der Laufrichtung des betreffenden Motors ab un wird von dessen Steuerung 12a bestimmt. Der Belichtungsablauf kann dann beispielsweise derart erfolgen, dass ausgehend von der Stellung, in der alle drei Filter im Strahlengang liegen und als Lichtverschluß wirken, für eine erste Belichtungsphase das Rot- und Grünfilter zugleich aus dem Strahlengang herausgeführt werden und die Belichtung durch das im Strahlengang verbleibende Blaufilter erfolgt ; in einer zweiten Phase wird das Blaufilter ausgeschwenkt und das Grünfilter eingeführt und es erfolgt eine Grünbelichtung ; in einer dritten Phase, schließlich, wird das Grünfilter ausgeschwenkt und das Rotfilter eingeführt ; nach erfolgter Rotbelichtung wird der Belichtungsvorgang durch neuerliches gleichzeitiges Einschwenken der Grün- und Blaufilter abgeschlossen.

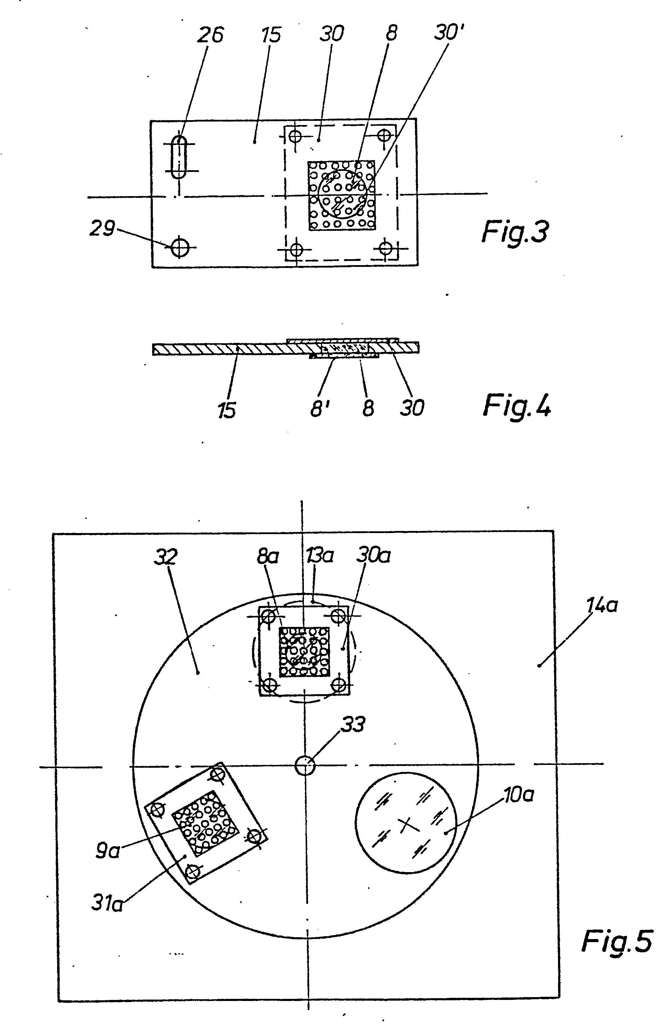

In den Figuren 3 und 4 ist die Anordnung eines Wärmeleitmittels beispielsweise für das Blaufilter 8 im einzelnen dargestellt. Auf dem die Führungsöse 26 und eine Bohrung 29 aufweisenden Filterhalter 15 ist ein Wärmeleitgitter 30 befestigt, das sich auf der im Gerät der Lichtquelle zugewandten Lichteinlaßseite über die gesamte im Strahlenquerschnitt wirksame Oberfläche des Filters 8 erstreckt und mit diesem in thermischem Kontakt ist. Das Wärmeleitgitter besteht beispielsweise aus einer Metallplatte oder -folie, aus der die benötigten Lichtdurchlaßöffnungen, von denen als Beispiel eine mit dem Bezugzeichen 30′ versehen ist, in einem bekannten Arbeitsverfahren herausgearbeitet werden. Die Größe, Anzahl und Form der Lichtdurchlaßöffnungen 30′ richtet sich nach den wärme- und lichttechnischen Erfordernissen. Je Größer die vom lichtundurchlässigen Teil des Gitters bedeckte Fläche bei sonst unveränderten Dimensionen und Materialeigenschaften ist, desto besser ist in der Regel die Wärmeableitung und desto geringer der für die Belichtung nützbare Strahlenquerschnitt. Beispielsweise kann der relative Flächenanteil der Lichtdurchlaßöffnungen bei einem Blaufilter geringer als bei einem Grünfilter sein. Dies deshalb, da die von der Lichtquelle 1 abgegebene Strahlungsenergie einen größeren Strahlungsüberschuß im Blaubereich als im Grünbereich aufweist.

Da die Farbfilter eine ebene, glatte Oberfläche aufweisen, ist der beste thermische Kontakt zwischen Wärmeleitgitter und Filter dann gewährleistet, wenn die Kontaktfläche des Gitters ebenso eben und glatt ist. Das Wärmeleitgitter 30 kann vor der Befestigung am Filterhalter 15 derart vorgespannt, beispielsweise gewölbt sein, dass es bei der Befestigung zur Verbesserung des Kontaktes federnd an der Oberfläche des Filters 8 aufliegt und einen Druck auf dieses ausübt. Das Filter 8 ist beispielsweise innerhalb einer entsprechenden Öffnung im Filterhalter 15 in bekannter Weise mittels eines geeigneten Klebestoffes befestigt. Zur Verbesserung dieser Befestigung kann es durch eine durchsichtige Platte 8′, beispielsweise aus Glas, die über die Filteröffnung im Filterhalter 15 hinausreicht und an diesen beispielsweise angeklebt ist, gehalten werden. Das Wärmeleitgitter 30 ist beispielsweise an den vier Eckpunkten, beispielsweise mittels einer Schraubverbindung am Filterhalter befestigt. Das Wärmeleitgitter 30 kann auch zur Befestigung des Filters 8 dienen, da es ohnedies mit diesem in engem Kontakt steht.

Zur Verbesserung der Wärmeableitung kann auf beiden Seiten des Filters 8 ein Wärmeleitgitter 30 vorgesehen sein.

Eine besonders gute Wärmeableitung ist dann gewährleistet, wenn das Wärmeleitgitter 30 nur in dem Bereich, in dem es das Filter 8 bedeckt, Lichtdurchlaßöffnungen 30′ aufweist und in einem über das Filter hinausgehenden Bereich keine Durchbrüche mehr aufweist, sodass die Kontaktfläche mit dem Filterhalter 15 zur Verbesserung des Wärmeübergangs möglichst groß ist.

In derselben Weise ist die in Figur 2 dargestellte Anordnung für das Grünfilter 9 aufgebaut und mit einem Wärmeleitgitter 31 versehen.

Die Anordnung für das Rotfilter 10 hingegen unterscheidet sich im vorliegenden Ausführungsbeispiel von der für das Blau- und Grünfilter dadurch, dass sie mit einem Interferenzfilter ausgestattet ist, das unter den im beschriebenen Gerät bestehenden Temperaturbedingungen keiner besonderen Maßnahme zur Wärmeableitung bedarf und bei dem somit das Wärmeleitgitter entfällt. Auf diese Weise wird bei der Rotbelichtung die verfügbare Lichtstärke voll genutzt, da sie keine Abschwächung durch ein Wärmeleitmittel am Filter erfährt.

Figur 5 zeigt eine andere Ausführungsform einer erfindungsgemäßen Filteranordnung. In dieser sind die Filter 8a, 9a und 10a auf einer als Filterhalter dienenden Scheibe 32 längs einer mit deren Mittelpunkt konzentrischen Kreislinie in bestimmten Abständen voneinander angeordnet. Die Filter 8a und 9a, beispielsweise dem Blau-und Grünfilter 8 und 9 der vorhergehenden Ausführungsform entsprechend, sind erfindungsgemäß mit an der Scheibe 32 befestigten und sich über die gesamte Filterfläche erstreckenden Wärmeleitgittern 30a und 31a versehen. Das Rotfilter 10a besteht, wie im vorhergehenden Ausführungsbeispiel, aus ausreichend hitzebeständigem Material, sodass das Wärmeleitgitter entfallen kann. Die Scheibe 32 ist auf einer eine Lichtdurchlaßöffnung 13a aufweisenden Platte 14a um eine gerätefeste Drehachse 33 in einer zur Achse des Lichtbündels senkrecht liegenden Ebene drehbar so angebracht, dass durch Drehen der Scheibe 32, beispielsweise durch einen nicht dargestellten elektrischen Motor, die Filter 8a, 9a und 10a nacheinander in den durch die Lichtöffnung 13a hindurchgehenden Strahlengang eingeführt und von diesem wieder herausgeführt werden können. Im Bereich zwischen den Filtern ist die Scheibe 32 lichtundurchlässig und kann somit in der Stellung, in der dieser Bereich die Lichtöffnung 13a abdeckt, die Funktion des Lichtverschlusses übernehmen.

In den beschriebenen Ausführungsbeispielen wird die thermische Entlastung der Filter durch Anbringen eines Wärmeleitgitters eng anliegend an das Filterelement erzielt. Andere Ausführungsformen, in denen wärmeleitende Gittermasken durch geeignete Verfahren, beispielsweise durch Aufdampfen einer wärmeleitenden Schicht, direkt auf das Filterelement aufgetragen werden, sind ebenfalls möglich.

## Ansprüche

1. Filteranordnung für fotografische Farbvergrößerungs- oder Kopiergeräte, dadurch gekennzeichnet, dass ein oder mehrere Farbfilter (8, 9 ; 8a, 9a) mit einem Lichtdurchlaßöggnungen (30′) enthaltenden Wärmeleitmittel (30, 31 ; 30a, 31a) in kontakt sind, dessen Wärmeleitfähigkeit höher als die des entsprechenden Farbfilters ist.

2. Filteranordnung nach Anspruch 1, dadurch gekennzeichnet, dass das Wärmeleitmittel (30, 31 ; 30a, 31a) platten- oder folienförmig ist und sich über die gesamte Oberfläche des jeweiligen Farbfilters (8, 9 ; 8a, 9a) erstreckt, mit dem es verbunden ist.

3. Filteranordnung nach Anspruch 1 oder 2, dadurch gekennzeichnet, dass das Wärmeleitmittel (30, 31 ; 30a, 31a) eine sich über das jeweils zu bedeckenden Farbfilter (8, 9 ; 8a, 9a) hinaus erstreckende Metallplatte oder -folie umfaßt, die nur im Bereich des Farbfilters Lichtdurchlaßöffnungen (30′) aufweist.

4. Filteranordnung nach Anspruch 1, dadurch gekennzeichnet, dass das Wärmeleitmittel (30, 31 ; 30a, 31a) eine mit dem entsprechenden Farbfilter (8, 9 ; 8a, 9a) durch einen Aufdampfungsvorgang verbundene Schicht umfaßt.

5. Filteranordnung nach einem der vorhergehenden Ansprüche, dadurch gekennzeichnet, dass das Wärmeleitmittel (30, 31 ; 30a, 31a) an der Lichteinlaßseite des jeweiligen Farbfilters (8, 9 ;

8a, 9a) angeordnet ist.

6. Filteranordnung nach einem der Ansprüche 1, 2, 3, 5, dadurch gekennzeichnet, dass das Wärmeleitmittel (30, 31 ; 30a, 31a) vorgespannt ist und auf das jeweilige Farbfilter (8, 9 ; 8a, 9a) einen Druck ausübt.

7. Filteranordnung nach einem der vorhergehenden Ansprüche, dadurch gekennzeichnet, dass zwei von drei Farbfiltern (8, 9, 10 ; 8a, 9a, 10a) mit dem Wärmeleitmittel (30, 31 ; 30a, 31a) verbunden sind.

8. Filteranordnung nach Anspruch 7, dadurch gekennzeichnet, dass die von den Lichtdurchlaßöffnungen (30') freigelassene Fläche bei den einzelnen mit dem Wärmeleitmittel (30, 31 ; 30a, 31a) verbundenen Filtern (8, 9 ; 8a, 9a) unterschiedlich ist.

9. Filteranordnung nach einem der Ansprüche 7 und 8, dadurch gekennzeichnet, dass die zwei mit dem Wärmeleitmittel (30, 31 ; 30a, 31a) verbundenen Farbfilter (8, 9 ; 8a, 9a) ein Blau- und ein Grünfilter sind und das dritte Farbfilter (10, 10a) ein Rotfilter ist.

10. Filteranordnung nach einem der Ansprüche 7 und 8, dadurch gekennzeichnet, dass die zwei mit dem Wärmeleitmittel (30, 31) verbundenen Farbfilter (8, 9) ein Gelb- und ein Purpurfilter sind und das dritte Farbfilter (10) ein Blaugrünfilter ist.

11. Filteranordnung nach einem der Ansprüche 1 bis 3 und 5 bis 10, dadurch gekennzeichnet, dass ein Farbfilter (8, 9 ; 9a, 9a) mittels des Wärmeleitmittels (30, 31 ; 30a, 31a) an einem Filterhalter (15, 16, 32) befestigt ist.

**Claims**

1. Filter arrangement for photographic colour enlarging apparatus or printing apparatus, characterised in that one or more colour filters (8, 9 ; 8a, 9a) are in contact with a heat conducting means (30, 31 ; 30a, 31a) containing light transmission openings (30'), the heat conductivity of which means is greater than that of the corresponding colour filter.

2. Filter arrangement according to claim 1, characterised in that the heat conducting means (30, 31 ; 30a, 31a) is in the form of a plate or sheet and extends over the entire surface of the respective coulour filter (8, 9 ; 8a, 9a) to which it is connected.

3. Filter arrangement according to claim 1 or 2, characterised in that the heat conducting means (30, 31 ; 30a, 31a) comprises a metal plate or sheet extending beyond the respective colour filter (8, 9 ; 8a, 9a) to be covered and having light-transmission openings (30') only in the region of the colour filter.

4. Filter arrangement according to claim 1, characterised in that the heat conducting means (30, 31 ; 30a, 31a) comprises a layer which is connected to the corresponding colour filter (8, 9 ; 8a, 9a) by means of an evaporation process.

5. Filter arrangement according to any one of the preceding claims, characterised in that the heat conducting means (30, 31 ; 30a, 31a) is arranged on the light inlet side of the respective colour filter (8, 9 ; 8a, 9a).

6. Filter arrangement according to any one of claims 1, 2, 3 and 5, characterised in that the heat conducting means (30, 31 ; 30a, 31a) is prestressed and exerts pressure on the respective colour filter (8, 9 ; 8a, 9a).

7. Filter arrangement according to any one of the preceding claims, characterised in that two out of three colour filters (8, 9, 10 ; 8a, 9a, 10a) are connected to the heat conducting means (30, 31 ; 30a, 31a).

8. Filter arrangement according to claim 7, characterised in that the area left free by the light transmission openings (30') is different in the case of the individual filters (8, 9 ; 8a, 9a) connected to the heat conducting means (30, 31 ; 30a, 31a).

9. Filter arrangement according to either of claims 7 or 8, characterised in that the two colour filters (8, 9 ; 8a, 9a) connected to the heat conducting means (30, 31 ; 30a, 31a) are a blue and a green filter and the third colour filter (10, 10a) is a red filter.

10. Filter arrangement according to either of claims 7 or 8, characterised in that the two colour filters (8, 9) connected to the heat conducting means (30, 31) are a yellow and a purple filter and the third colour filter (10) is a blue-green filter.

11. Filter arrangement according to any one of claims 1 to 3 and 5 to 10, characterised in that a colour filter (8, 9 ; 8a, 9a) is attached to a filter holder (15, 16, 32) by means of the heat conducting means (30, 31 ; 30a, 31a).

**Revendications**

1. Dispositif de filtrage pour agrandisseurs photographiques ou machines à copier en couleur, caractérisé par le fait qu'un ou plusieurs filtres colorés (8, 9 ; 8a, 9a) sont en contact avec un moyen de conduction de chaleur (30, 31 ; 30a, 31a) présentant des ouvertures de passage de lumière et dont la conductivité thermique est supérieure à celle du filtre coloré correspondant.

2. Dispositif de filtrage selon la revendication 1, caractérisé par le fait que le moyen de conduction de chaleur (30, 31 ; 30a, 31a) est en forme de plaque ou de feuille et s'étend sur toute la surface du filtre coloré respectif (8, 9 ; 8a, 9a) avec lequel il est relié.

3. Dispositif de filtrage selon l'une des revendications 1 et 2, caractérisé par le fait que le moyen de conduction de chaleur (30, 31 ; 30a, 31a) comprend une plaque ou feuille métallique s'étendant au-delà du filtre à couvrir dans chaque cas (8, 9 ; 8a, 9a) et qui présente seulement des ouvertures de passage de lumière dans la région du filtre coloré.

4. Dispositif de filtrage selon la revendication 1, caractérisé par le fait que le moyen de conduction de chaleur (30, 31 ; 30a, 31a) comprend une couche liée au filtre coloré correspondant (8, 9 ; 8a, 9a) par un processus de vaporisation.

5. Dispositif de filtrage selon l'une des revendications précédentes, caractérisé par le fait que le moyen de conduction de chaleur (30, 31 ; 30a, 31a) est disposé sur le côté d'entrée de lumière du filtre coloré respectif (8, 9 ; 8a, 9a).

6. Dispositif de filtrage selon l'une des revendications 1, 2, 3 et 5, caractérisé par le fait que le moyen de conduction de chaleur (30, 31 ; 30a, 31a) est précontraint et exerce une pression sur le filtre coloré respectif (8, 9 ; 8a, 9a).

7. Dispositif de filtrage selon l'une des revendications précédentes, caractérisé par le fait que deux de trois filtres colorés (8, 9, 10 ; 8a, 9a, 10a) sont reliés au moyen de conduction de chaleur (30, 31 ; 30a, 31a).

8. Dispositif de filtrage selon la revendication 7, caractérisé par le fait que la surface laissée libre par les ouvertures de passage de lumière (30') est différente pour les différents filtres (8, 9 ; 8a, 9a) reliés au moyen de conduction de chaleur (30, 31 ; 30a, 31a).

9. Dispositif de filtrage selon l'une des revendications 7 et 8, caractérisé par le fait que les deux filtres colorés (8, 9 ; 8a, 9a) reliés au moyen de conduction de chaleur (30, 31 ; 30a, 31a) sont un filtre bleu et un filtre vert et que le troisième filtre coloré (10, 10a) est un filtre rouge.

10. Dispositif de filtrage selon l'une des revendications 7 et 8, caractérisé par le fait que les deux filtres colorés (8, 9) reliés au moyen de conduction de chaleur (30, 31) sont un filtre jaune et un filtre pourpre et que le troisième filtre coloré (10) est un filtre vert-bleu.

11. Dispositif de filtrage selon l'une des revendications 1 à 3 et 5 à 10, caractérisé en ce qu'un filtre coloré (8, 9 ; 8a, 9a) est fixé à un porte-filtre (15, 16, 32) à l'aide du moyen de conduction de chaleur (30, 31 ; 30a, 31a).

Fig.1

Fig.2

Fig.3

Fig.4

Fig.5